# EUROPÄISCHE PATENTSCHRIFT

(11) **EP 1 571 514 B1**
(45) Veröffentlichungstag und Bekanntmachung des Hinweises auf die Patenterteilung: **03.03.2010**
(21) Anmeldenummer: 04005388.6
(22) Anmeldetag: 06.03.2004
(51) Int. Cl.: G05B 19/418

(54) **System zur Steuerung und Bedienung technischer Prozesse**
Process control system
Système de commande de processus

(43) Veröffentlichungstag der Anmeldung: 07.09.2005
(73) Patentinhaber: Renner, Peter, 51515 Kürten (DE)
(72) Erfinder: Renner, Peter, 51515 Kürten (DE)
(74) Vertreter: Nau, Walter

(56) Entgegenhaltungen:
- EP-A- 1 184 760
- EP-B- 0 513 339
- DE-A1- 10 147 744
- DE-A1- 10 316 219
- US-A- 4 802 115
- US-A- 5 499 188
- US-B1- 6 266 726

## Beschreibung

**Die Erfindung bezieht sich** auf ein Verfahren zur Bedienung und Steuerung technischer Prozesse gemäß dem Oberbegriff des Patentanspruchs 1.

Allgemein bekannt ist eine grosse Gruppe von Produkten, die vor allem zur Steuerung von Maschinen eingesetzt werden. Sie sind als SPS-Geräte oder PLC-Geräte bekannt. Diese Geräte sind mit beherrschenden Steuerprogrammen ausgestattet, deren Aufgabe es ist, Maschinen und Anlagen (Prozesse) über Sensoren und Aktoren zu steuern.

Für die Bedienerführung wird eine von der Steuer Software unabhängige

Visualisierungs-Software eingesetzt.

Steuersoftware und Visualisierung passen nicht zusammen, da ihre Konzepte unterschiedlich sind, sich auf unterschiedliche Plattformen beziehen, wodurch diese Lösungen nicht konsistent sind. Dies drückt sich in einer ungenügenden Anpassung an die differenzierten Anforderungen der unterschiedlichen Prozesse aus. In der Praxis führt dies häufig zu Problemen und komplizierten Lösungen.

Weiterhin ist eine Gruppe von Produkten bekannt, die hauptsächlich in der Forschung und Entwicklung eingesetzt werden. Sie gehen auf das Ende der 80er Jahre zurück, als die PCs einen hinreichenden Grad der Leistungsfähigkeit, vor allem der graphischen Fähigkeiten, erreicht hatten. Es handelt sich um sogenannte virtuelle Messgeräte. Bis dato kannte man Messgeräte mit Knöpfen, Tasten, Schaltern und Anzeigeinstrumenten. Mess-Schaltungen wurden körperlich aus Draht und Filtern u.ä. aufgebaut.

Dies wurde nun durch virtuelle Messgeräte und Mess-Schaltungen ersetzt. Nun hatte man Abbildungen solcher Geräte auf dem Bildschirm. Drehen an Knöpfen, Betätigen von Tasten und Schaltern wurde durch Mausklicks ersetzt. Damit konnte ein Prozess bedient und beobachtet werden.

Eine automatische Steuerung war damit aber nicht möglich. Um diesen Misstand zu beseitigen, wurde eine Programmiersprache darüber gestülpt. Nach der Meinung einer Vielzahl von Anwendern ist die Einrichtung einer Automatisierung auf der Basis solcher Lösungen sehr kompliziert und erfordert eine lange Einarbeitungszeit. Anwender benötigen Spezialkenntnisse, die sie sich aneignen müssen. Der Aufwand ist beträchtlich. Bei diesen Lösungen ist es nicht gelungen eine Konsistenz zwischen Bedienen und Beobachten und der Automatisierung herzustellen. Gerade in der Laborautomatisierung wäre es sehr vorteilhaft, wenn man einfache Lösungen hätte, die es ermöglichen, schnell und ohne grossen Aufwand Automatisierungsaufgaben zu entwickeln, ohne dass Spezialkenntnisse bzw. der Einsatz von Spezialisten erforderlich sind.

Schließlich ist aus der DE 103 16 219 A1 ein Verfahren zur Bedienung und Steuerung technischer Prozesse bekannt, mit zumindest einer als Mess- und eine Steuergerät ausgebildeten Baugruppe, die mittels elektrischer Leitungen mit Sensoren und Aktoren von Prozessen in Verbindung steht, und mit einem Steuerprogramm, wobei eine Mess- und Steuereinheit, eine Bedien- und Beobachtungsbaugruppe und je eine optional vorgesehene Datenbank, eine Prozessdokumentation (Drucker) sowie ggfs. weitere Baugruppen einer Prozessautomatisierung durch Datenkanäle und ein Steuerprogramm miteinander verbunden sind, wobei weiterhin der Datenaustausch über die Datenkanäle zwischen den Baugruppen durch Standard-Übertragungsprotokolle erfolgt.

**Der Erfindung liegt die Aufgabe zugrunde**, diese Mängel zu beseitigen. Es soll zur Lösung der unterschiedlichen Aufgaben ein Verfahren zur Verfügung gestellt werden, das die verschiedenen Baugruppen einer Prozessautomatisierung wie das Steuerprogramm, die Prozessvisualisierung, die Parametereingabe und die Dokumentation in einem konsistenten System integriert. Es soll dem Anwender ermöglicht werden, Steuerungsabläufe zu konfigurieren, wodurch das Programmieren und das Erlernen einer Programmiersprache entfällt.
**Gelöst wird die Aufgabe der Erfindung dadurch, dass**
- das Steuerprogramm in Steuermodule strukturiert ist, wobei die Steuermodule den Kategorien Abläufe, Ereignisse und Funktionen zugeordnet sind und diese Steuermodule virtuelle Container für Programmcode sind,
- das den verschiedenen Steuermodulen unterschiedliche Aufgaben zugeordnet sind, die von dem Programmierer in Abhängigkeit des zu steuernden technischen Prozesses ausgewählt werden,
- die Steuermodule nach einfachen Regeln aufgerufen werden und andere Steuermodule aufrufen,
- wobei ein Startmodul durch einen Programmaufruf gestartet wird und seinerseits ein Ablaufmodul oder ein Funktionsmodul aufrufen kann,
- wobei ein Ablaufmodul von einem Startmodul, einem anderen Ablaufmodul oder einem Ereignismodul aufgerufen wird kann und seinerseits ein weiteres Ablaufmodul, ein Funktionsmodul oder ein Endmodul aufruft,
- wobei ein Funktionsmodul von einem Ablaufmodul, einem Startmodul, einem Endmodul oder einem Ereignismodul aufgerufen wird,
- wobei ein Ereignismodul durch ein Ereignis, dass in dem Prozess stattfindet, oder von einer Bedienerhandlung gestartet wird und seinerseits ein Ablaufmodul, ein Funktionsmodul oder ein Endmodul aufruft,
- wobei ein Endmodul durch ein Startmodul, ein anderes Ablaufmodul oder ein Ereignismodul aufgerufen wird.

Das bedeutet, dass das Steuerprogramm mit den anderen Baugruppen des Systems wie den Mess- und Steuergeräten, der Bedien- und Beobachtungs-Baugruppe und optional weiteren Gruppen, wie der Dokumentation und den Datenbanken durch Datenkanäle verbunden ist. Durch die Einbeziehung der weiteren Baugruppen in das Steuerprogramm wird eine grosse Flexibilität ermöglicht, die eine optimale Anpassung an die Anforderungen der Automatisierung der jeweiligen Prozesse zulässt.

In weiterer Ausgestaltung der Erfindung erfolgt der Datenaustausch zwischen den Baugruppen durch Standard-Übertragungsprotokolle, die es erlauben, die einzelnen Baugruppen entweder auf einem Gerät zu betreiben oder auf verschiedene Geräte zu verteilen. Die Geräte können dann Teilnehmer eines Standard-Datennetzes, z. B. Ethernet sein. Dadurch lassen sich Anwendungen konzipieren, die Vorteile beim Aufwand und bei der Betriebsorganisation ermöglichen, da das Datennetz eines Unternehmens auch für die Aufgaben der Automatisierung von Prozessen genutzt werden kann.

Ein weiterer Erfindungsgedanke beschäftigt sich mit den Steuerungsabläufen. Zunächst wird der gesamte Ablauf einer Prozesssteuerung in Steuermodule unterteilt, wobei diese Steuermodule den Kategorien Abläufe, Ereignisse und Funktionen zugeordnet und diese Steuermodule Container für Programmcode sind.

Hieraus resultieren drei Typen von Steuermodulen. Dies sind die Typen Ablaufmodule, Ereignismodule und Funktionsmodule.

Das Ablaufmodul ist, wie sein Name aussagt, für die zeitliche Aneinanderreihung der verschiedenen Aktivitäten verantwortlich. Er übernimmt die Prozessführung. Unter Prozessführung wird das Steuerprogramm des Prozessablaufs verstanden. Beispielhaft sei dies an einem Mischprozess erläutert. Bei einem Mischer ergibt sich der Prozessablauf durch Steuerung des Einfüllens der Komponenten, die gemischt werden sollen, das Aufheizen des Mischgutes durch Temperaturregelung, durch Drehzahlsteuerung des Rührwerkes und Mischzeit, Entleeren des Mischers und Reinigung.

Der Ereignismodul bearbeitet Vorgänge, die die Prozessführung beeinflussen und zu einem nicht vorherbestimmbaren Zeitpunkt eintreten können. Sobald das Ereignis eintritt, werden Aktivitäten ausgelöst, die den Ablauf beeinflussen. Z. B. kann das Ereignis das Erreichen einer Temperatur eines Aufheizvorgangs sein. Ein weiteres Beispiel wäre eine Bedienerhandlung über die Bedien- und Beobachtungsbaugruppe, in dem der Bediener den Sollwert eines Reglers verändert. Ereignismodule können entweder vorübergehend den Ablauf unterbrechen und selbst die Prozessführung während der Unterbrechung übernehmen oder parallel zu den Abläufen ausgeführt werden.

Kennzeichen der Funktionsmodule ist, dass sie Tätigkeiten übernehmen, die parallel zu anderen Steuermodulen ablaufen. Z. B. können beim Befüllen eines Behälters gleichzeitig mehrere Komponenten eingefüllt werden, wobei der Füllvorgang der einzelnen Komponenten durch je ein Funktionsmodul gesteuert wird. Funktionsmodule werden üblicherweise durch Ablaufmodule aufgerufen, seltener durch Ereignismodule. Typische weitere Vorgänge, die durch Funktionsmodule ausgeführt werden, sind Regelungen, Aufheizvorgänge, Überwachungsvorgänge etc. Funktionsmodule können Messdaten aufnehmen, die auf der Bedieneroberfläche als Trendgraphiken dargestellt werden. Durch Funktionsmodule werden Möglichkeiten geschaffen, die den Prozessablauf optimieren.

Die Steuerprogramme werden durch Funktionsmodule übersichtlicher und leichter zu verstehen.

Eine Kategorie technischer Prozesse wird als Batch-Prozesse oder diskontinuierliche Prozesse bezeichnet. Kennzeichnung solcher Prozesse ist eine Start- und Endphase (Herunterfahren des Prozesses). Ein Beispiel wäre eine Pumpstation, die zugeschaltet wird, sobald ein Wasserspeicher aufgefüllt werden soll. Der Startvorgang und das Herunterfahren sind der Kategorie Abläufe zuzuordnen. Deshalb ist es zweckmässig in der Kategorie Abläufe einen Typ Startmodul und einen Typ Endmodul vorzusehen. Diese Typisierung ist nicht zwingend, da auch ein Ablaufmodul den Startvorgang und das Herunterfahren steuern könnte.

Durch diese Festlegung enthält die Kategorie Abläufe die drei Modultypen Startmodul, Ablaufmodul und Endmodul.

Bei Prozessabläufen können kritische, im normalen Betriebsablauf nicht vorgesehene, Zustände auftreten. Sei es, dass ein Regler gestört ist, wodurch eine Temperatur einen kritischen Grenzwert überschreitet. Dann ist es aus sicherheitstechnischen Gründen häufig erforderlich den Prozess herunterzufahren. Dies wird auch als Not-Aus bezeichnet. Erfindungsgemäss wid daher ein Securitymodul definiert. Das Securitymodul reagiert auf, im normalen Betriebsablauf nicht vorkommende, Ereignisse. Er wird daher der Kategorie Ereignisse zugeordnet. Aufgabe des Securitymoduls ist es, den normalen Prozessablauf zu unterbrechen und den Prozess herunterzufahren. Durch diese Festlegung enthält die Kategorie Ereignisse die Modultypen Ereignismodul, Securitymodul.

In weiterer Ausbildung der Erfindung ist es vorgesehen, den verschiedenen Modultypen unterschiedliche graphische Symbole zuzuordnen. Diese graphischen Symbole sollen sich deutlich voneinander unterscheiden.

In der Bedien- und Beobachtungs-Baugruppe, die eine Reihe von Bildschirmen beinhalten kann, sind Modulschaubilder vorgesehen. Ein Anwender erstellt im Konfigurationsmodus Modulschaubilder. Dadurch wird in vorteilhafter Weise ein sehr guter Überblick über die Prozessabläufe ermöglicht.

Die Steuermodule werden als graphische Symbole auf dem Modulschaubild platziert und mit Linien verbunden. Diese Linien zeigen symbolisch, wie Steuermodule von anderen Steuermodulen aufgerufen werden und selbst andere Steuermodule aufrufen können. Die Anordnung der Symbole und die Verbindungslinien, die festen Regeln unterliegen, gestatten, die Struktur und die Abläufe der Automatisierungsaufgabe auf einen Blick zu erkennen.

Im Laufzeitmodus, also während der Ausführung eines Prozesses, werden erfindungsgemäss die Steuermodule markiert, deren Programminhalte gerade abgearbeitet werden. Dadurch kann ein Beobachter erkennen, in welchem Stadium sich der Prozessablauf befindet.

Das Verbinden der Steuermodule erfolgt erfindungsgemäß nach festen Regeln. Die Software prüft, ob der Anwender diese Regeln einhält, so dass Fehler weitgehend vermieden werden.

Diese Regeln besagen, dasss Steuermodule der Kategorie Abläufe (Ablaufmodule, Start- und Endmodule) nur vertikal verbunden werden, dass Ereignismodule und Securitymodule nicht durch andere Steuermodule aufgerufen werden, aber andere Steuermodule aufrufen können, dass Funktionsmodule horizontal mit dem aufrufenden Steuermodul verbunden werden.

Es ist wichtig anzumerken, dass die Verbindungslinien bei den vertikal angeordneten Steuermodulen auch einen seitlichen Versatz zulassen müssen, dass die Verbindungslinien bei den horizontal verbundenen Funktionsmodulen auch einen Versatz in vertikaler Richtung zulassen müssen, jenachdem wie die Steuermodule im Modulschaubild angeordnet sind. Dies wird aus den Bildern der Beispiele ersichtlich. Zweckmässigerweise wird ein Anwender die Steuermodule so von oben nach unten anordnen, wie es dem Programmverlauf entspricht.

Es wird als selbstverständlich angesehen, dass die jeweiligen Richtungen vertikal und horizontal austauschbar sind.

Hervorzuheben sind die einfachen Regeln, mit denen die Steuermodule aufgerufen werden und andere Module aufrufen, symbolisiert durch die Verbindungslinien zwischen den Modulen, und dass die Erfindung es ermöglicht, mit nur sehr wenigen unterschiedlicher Modultypen auszukommen.

Die Module dienen als virtuelle Container für den Programmcode. Der Zugang erfolgt beispielsweise durch einen Doppelclick auf das Symbol des Steuermoduls im Modulschaubild. Es öffnet sich dann eine Oberfläche, die den Programmcode des Steuerprogrammes enthält, der nun bearbeitet werden kann.

Erfindungsgemäß enthalten die einzelnen Anweisungen des Steuerprogramms Schlüsselworte, die als Platzhalter für weitere Schlüsselworte und Elemente des Programmcodes dienen.

Die Schlüsselworte in dem Code des Steuerprogramms, die deutlich sichtbar hervorgehoben sind, z. B. durch unterstreichen und/oder farbige Kennzeichnung, müssen zwingend durch Programmcode ersetzt werden. Erst wenn alle Schlüsselworte durch Programmcode ersetzt sind, wird das Steuerprogramm des Steuermoduls als fertig freigegeben.

Die Schlüsselworte ermöglichen gemäß einer Ausgestaltung der Erfindung den Zugang zu Auswahllisten. Auf einfache Weise wird durch Klick auf das Schlüsselwort die zum Schlüsselwort gehörige Auswahlliste geöffnet.

Die Inhalte der einzelnen Listenpunkte der jeweiligen Auswahlliste sind so gestaltet, dass sie, wenn sie das Schlüsselwort ersetzen, einen sinnvollen und fehlerfreien Programmcode erzeugen. Dadurch ist es erforderlich, dass alle Schlüsselworte durch Programmcode ersetzt werden müssen. Erst wenn alle Schlüsselworte durch Programmcode ersetzt worden sind, wird das Steuerprogramm des Steuermoduls als fertig freigegeben. Wenn also ein Listenpunkt aus der Auswahlliste gewählt wird, so ersetzt dieser automatisch das Schlüsselwort.

Durch diese Art der Erstellung des Programmcodes hat es ein Anwender nicht nötig, die Sprache zu erlernen. Er schreibt ausser den Werten von Konstanten keinen Programmtext. Der Programmtext wird mit Hilfe der Computermouse automatisch erzeugt,

somit sind Syntaxfehler ausgeschlossen. Ferner sind unlogische oder nicht sinnvolle Programmsequenzen ausgeschlossen, da die Auswahlliste, als Ersatz für das jeweilige Schlüsselwort, nur sinnvolle und logische Einträge ermöglicht. Die Konsequenz hieraus ist, dass Fehlermeldungen, wie sie sonst unbedingt notwendig sind, nicht vorkommen. Mit Ausnahme einer Fehlermeldung, die erscheint, wenn nicht alle Schlüsselworte ersetzt worden sind.

In weiterer Ausbildung der Erfindung wird vorgesehen, dass alle Programmanweisungen den Kategorien Abfrage oder Aktion zugeordnet sind. Dadurch ist das erste Schlüsselwort einer Programmanweisung entweder das Schlüsselwort Abfrage oder Aktion. Es kann auch eine andere Wortwahl getroffen werden, die sinngemäss das Gleiche bedeutet.

Somit wird es dem Nutzer sehr leicht gemacht, eine Entscheidung zu treffen, wenn er eine neue Programmzeile anlegen möchte. Sobald er eine neue Zeile einfügt, erscheinen in der Auswahlliste die Punkte Abfrage und Aktion. Durch Click auf einer der beiden Auswahlpunkte wird entweder die Programmanweisung Abfrage oder Aktion eingefügt. Diese enthält weitere Schlüsselworte, sodass mit dem gleichen Auswahlverfahren durch mehrere Schritte die Progammanweisung fertiggestellt werden kann.

Mit der Abfrageanweisung können Prozesszustände, Bedienerhandlungen, Eingabeparameter ermittelt werden. Z.B. kann abgefragt werden, ob eine Temperatur einen bestimmten Wert überschritten hat, ob ein Behälter gefüllt ist, ob ein Aggregat eingeschaltet ist, ob eine Taste betätigt wurde und vieles mehr.

Die Abfrageanweisung hat die sinngemässe Formulierung >Wenn (logische Operation) dann<. Wobei Optionen der Abfrageanweisung in der Form >Wenn nicht dann...< oder >Wenn das erste Mal dann...< möglich sind.

Die Aktionsanweisung ermöglicht viefältige Operationen, die den Kategorien Prozesssteuerung, Informationen für das Bedienungspersonal, Speicherung von Daten (Dokumentationen), mathematische Operationen (Formeln), programmtechnische Operationen (z. B. Beispiel Schleifen), Ausgaben in Reports zugeordnet werden können.

Zur weiteren Erläuterung der Erfindung wird auf die Abbildungen verwiesen, in denen Ausführungsbeispiele vereinfacht dargestellt sind.

Es zeigen:
- **Abbildung 1**: eine schematische Anordnung der Baugruppen der Prozess-Steuerung,
- **Abbildung 2**: Symbole, die die drei Kategorien Ablaufmodule, Ereignismodule, Funktionsmodule repräsentieren,
- **Abbildung 3**: einenAusschnitt eines Visualisierungsschaubildes,
- **Abbildung 4a, 4b**: je ein Modulschaubild,
- **Abbildung 5**: ein fertiger Programmcode eines Moduls und
- **Abbildung 6a bis 6h**: eine interaktive Erstellung einer Programmanweisung.

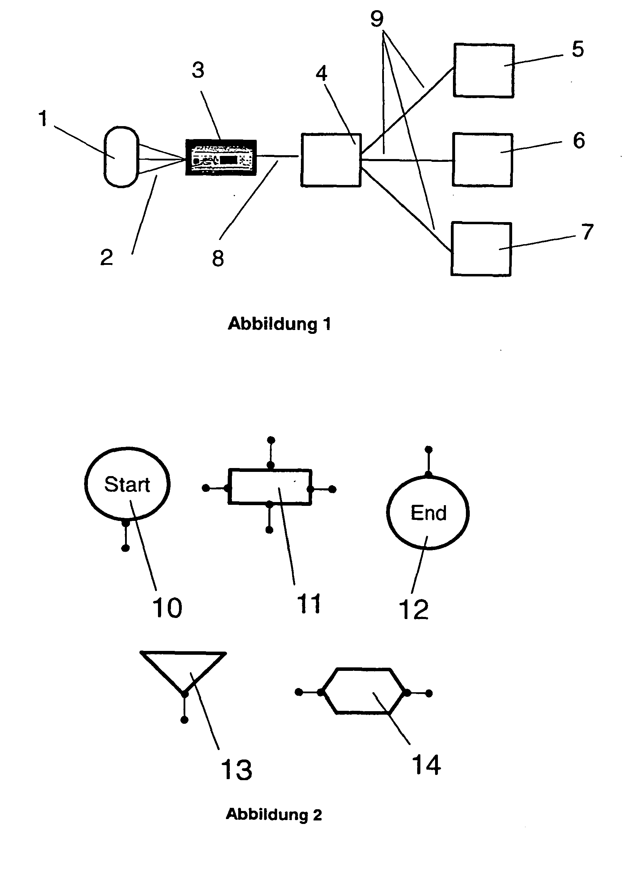

**In** **Abbildung 1** **sind bezeichnet**
mit 1 ein zu steuernde Prozess,
mit 2 Sensor- und Aktorleitungen, die Sensoren und Aktoren des Prozesses
mit den Mess- und Steuereinheiten verbinden,
mit 3 eine Mess- und Steuereinheit,
mit 4 ein Steuerprogramm,
mit 5 eine Bedien- und Beobachtungs-Baugruppe,
mit 6 eine Datenbank,
mit 7 ein Drucker zum Erstellen der Reports,
mit 8 ein Datenkanal
mit 9 Datenkanäle

**Die Funktion entsprechend** **Abbildung 1** **ist folgende:**

Der Prozess 1 ist durch die Mess- und Steuerleitungen 2 mit der Mess- und Steuereinheit 3 verbunden. Die Mess- und Steuerleitungen 2 transportieren Signale der Sensoren des Prozesses 1 zur Mess- und Steuereinheit 3 und umgekehrt Steuersignale zu den Aktoren des Prozesses 1. Die Mess- und Steuereinheit 3 ist sowohl ein Messgerät als auch ein datenverarbeitendes Gerät. Sie sorgt dafür dass die Prozesssignale so umgeformt werden, dass die Daten über den Datenkanal 8 mit dem Steuerprogramm 4 ausgetauscht werden können. Das Steuerprogramm 4 ist über die Datenkanäle 9 mit den anderen Baugruppen des Systems, der Bedien- und Beobachtungs-Baugruppe 5, der Datenbank 6 und dem Drucker 7 (zum Erstellen der Reports) verbunden. Der Datenverkehr über die Datenkanäle 8, 9 erfolgt mit dem Hardwareprotokoll Ethernet und dem Softwareprotokoll TCP/IP. Dies ermöglicht es, die einzelnen Funktionen in einem Gerät oder verteilt auf mehrere Geräte zu realisieren. Es wird eine hohe Flexibilität bei der Anpassung an die jeweiligen räumlichen Verhältnisse und an die Grösse der jeweiligen Anwendung erreicht.

Das Steuerprogramm 4 steht im Zentrum des Datenverkehrs, da es sternförmig mit den übrigen Baugruppen 3, 5, 6 und 7 über die Datenkanäle 8, 9 verbunden ist.

Dadurch wird ermöglicht, dass das Steuerprogramm 4 programmgesteuert Daten zur Beobachtung des Systems an die Bedien- und Beobachtungs-Baugruppe 5 senden kann, die dort dem Operator Prozesszustände anzeigen. Umgekehrt werden Bedienungshandlungen des Operators dem Steuerprogramms 4 zugeführt, das seinerseits aufgrund der Anweisungen entsprechende Zustandsänderungen im Prozess 1 auslösen.

Weiterhin kann das Steuerprogramm 4 Daten mit der Datenbank 6 austauschen. Einerseits kann Sie Prozessparameter auslesen, im Steuerungsprogramm verarbeiten und den Prozess 1 entsprechend steuern. Umgekehrt können Daten zum Qualitätsnachweis an die Datenbank 6 weitergegeben werden.

Der Protokolldrucker 7 wird Daten über eine der Datenleitungen 9 erhalten und kann dann Protokolle erstellen.

**In** **Abbildung 2** **sind bezeichent**
mit 10 das Symbol des Startmoduls der Kategorie Abläufe,
mit 11 das Symbol des Ablaufmoduls der Kategorie Abläufe,
mit 12 das Symbol des Endmoduls der Kategorie Abläufe,
mit 13 das Symbol des Ereignismoduls der Kategorie Ereignisse,
mit 14 das Symbol des Funktionsmoduls.

**Die Funktion entsprechend** **Abbildung 2** **ist folgende:**

Diese Symbole repräsentieren Steuermodule. Sie können im Modulschaubild auf die Oberfläche gezogen, angeordnet und mit Linien verbunden (verknüpft) werden. Somit kann das Gerüst des Steuerprogramms konzipiert werden. Durch Klick auf die jeweiligen Module wird der Zugang zu dem Programmcode des Steuerprogramms ermöglicht.

Die Symbole zeigen, wie sie mit anderen Symbolen verknüpft werden können. Das Ablaufmodul 11 kann vertikal mit anderen Ablaufmodulen oder mit dem Startmodul und einem Endmodul verknüpft werden. Er kann horizontal mit Funktionsmodulen verknüpft werden. Das Ereignismodul 13 kann nur ein Ablaufmodul oder ein Endmodul aufrufen. Es kann jedoch nicht selbst durch ein anderes Modul aufgerufen werden. Der Funktionsmodul 14 kann nur durch ein Ablaufmodul aufgerufen werden, kann jedoch selbst keinen anderen Modul aufrufen.

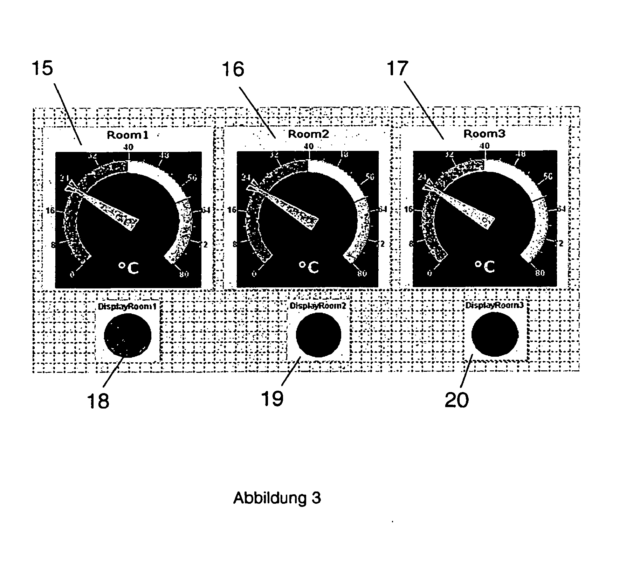

**In** **Abbildung 3** **sind bezeichnet**
mit 15, 16, 17 Visualisierungsbjekte von Analoganzeigegeräte und
mit 18, 19, 20 Visualisierungsbjekte von Signalleuchten

**Die Funktion entsprechend** **Abbildung 3** **ist folgende:**

Die drei (virtuellen) Analoganzeigegeräte 15, 16, 17 des Visualisierungsschaubildes zeigen die Temperaturen dreier Räume an, die mit Room1, Room2 und Room3 bezeichnet sind.

Die (virtuellen) Signalleuchten zeigen an, in welchem der Räume 15, 16, 17 gerade die Temperatur entsprechend eines Temperaturprofils geregelt wird.

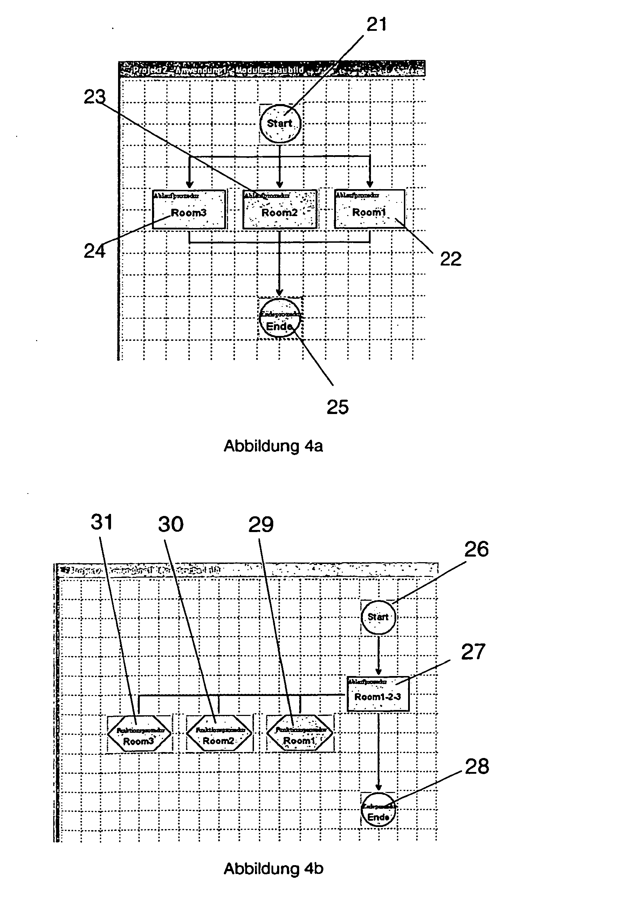

**In** **Abbildung 4a** **sind bezeichnet**

| | |
|---|---|
| mit 21 | ein Startmodul, |
| | |
| mit 21, 23, 24 | Ablaufmodule und |
| mit 25 | ein Endmodul. |

**In** **Abbildung 4b** **sind bezeichnet**

| | |
|---|---|
| mit 26 | ein Startmodul, |
| | |
| mit 27 | ein Ablaufmodul, |
| mit 28 | ein Endmodul und |
| mit 29, 30, 31 | Funktionsmodule. |

**Die Funktion entsprechend** **Abbildung 4a und 4b** **ist folgende:**

In beiden Modulschaubildern werden drei Klimräume, durch die Symbole 23, 24, 25 und 29, 30, 31 dargestellt. Die Temperatur der Klimaräume wird geregelt. Der gravierende Unterschied besteht darin, das im Modulschaubild 4a jeweils nur ein Raum 22, 23, 24 zur gleichen Zeit geregelt werden kann, während im Modulschaubild 4b die Räume zur gleichen Zeit geregelt werden können.

Der Grund hierfür ist, dass die Regelung in Abbildung 4a durch Ablaufmodule 22, 23, 24 erledigt wird, während in Abbildung 4b dies durch drei Funktiondmodule 29, 30, 31 geschieht.

Bei Ablaufmodulen in Abbildung 4a kann nur jeweils eines dieser Module gleichzeitig in Funktion sein, da das Ablaufmodul die Prozessführung übernimmt. In Abbildung 4b sind drei Funktionsmodule 29, 30, 31 mit dieser Aufgabe betraut.

Funktiondmodule arbeiten parallel und unabhängig voneinander. Daher können die Räume zur gleichen Zeit geregelt werden. In Abbildung 4b übernimmt das Ablaufmodul 27 die Prozessführung. Es hat nur eine Wartefunktion, während die Räume durch die Funktionsmodule 29, 30, 31 geregelt werden.

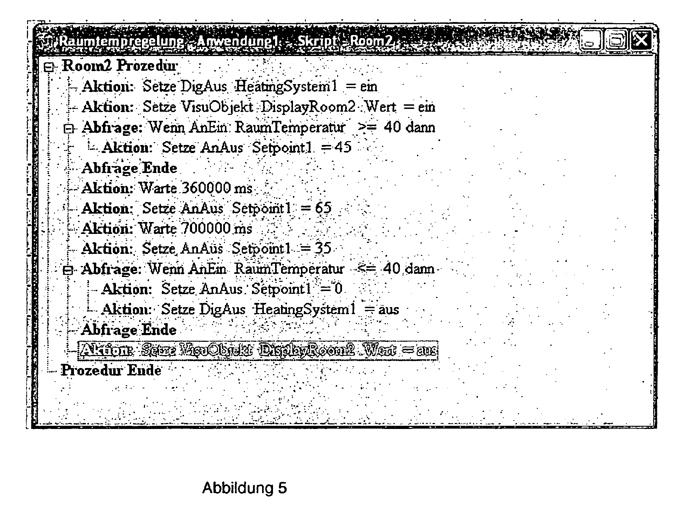

**Die** **Abbildung 5** **zeigt** den fertigen Programmcode des Ablaufmoduls 23 und des Funktionsmoduls 30. Die Temperatur wird zuerst während einer definierten Zeit auf 45 °C geregelt, dann auf 65 °C, ebenfalls während eines fixen Zeitraumes. Danach wird auf Raumtemperatur zurückgefahren.

Man sieht, das die einzelnen Programmanweisungen ausschliesslich den Kategorien Abfage und Aktion angehören.

Die Anweisung "Abfrage" ist ein Anweisungsblock bestehend aus zwei Zeilen in die Aktionsanweisungen meist eingeschlossen sind.

Die Aktionsanweisung der zweiten Zeile schaltet einen digitalen Kanal (HeatingSysteml) des angeschlossenem Prozess ein. Weitere Aktions- und Abfrageanweisungen korrespondieren mit dem Prozess.

Die Aktionsanweisungen der dritten Zeile von oben und der vorletzten Zeile korrespondieren mit dem Visuobjekt DisplayRoom 2 (Bezugsziffer 19 in Abbildung 3) und schalten die Signalleuchte ein und aus.

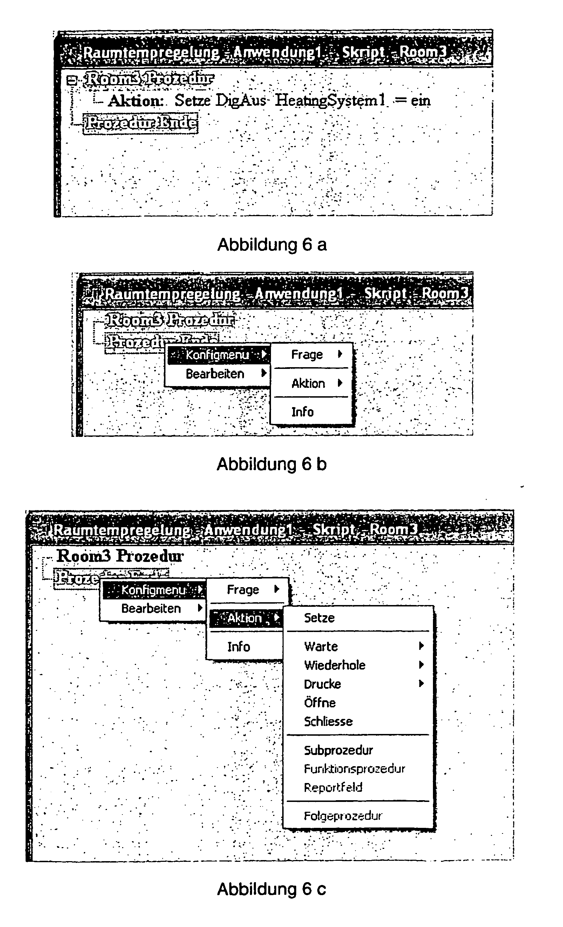

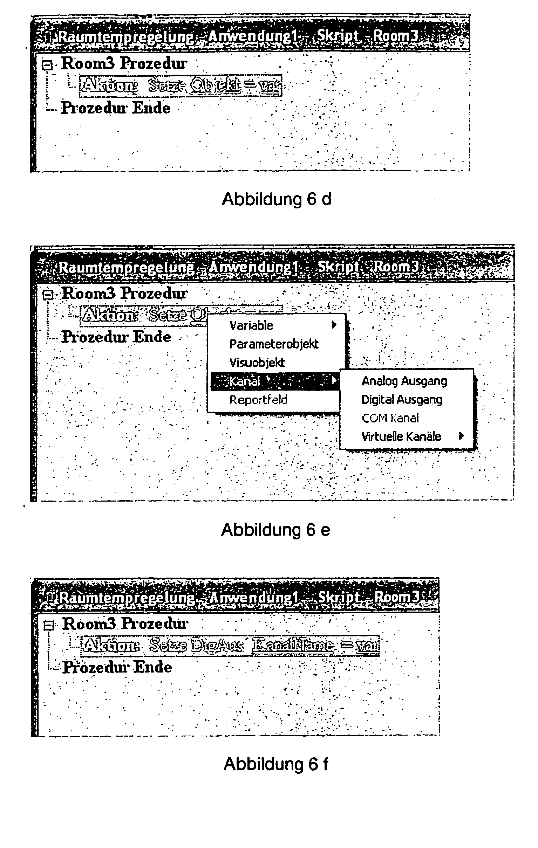

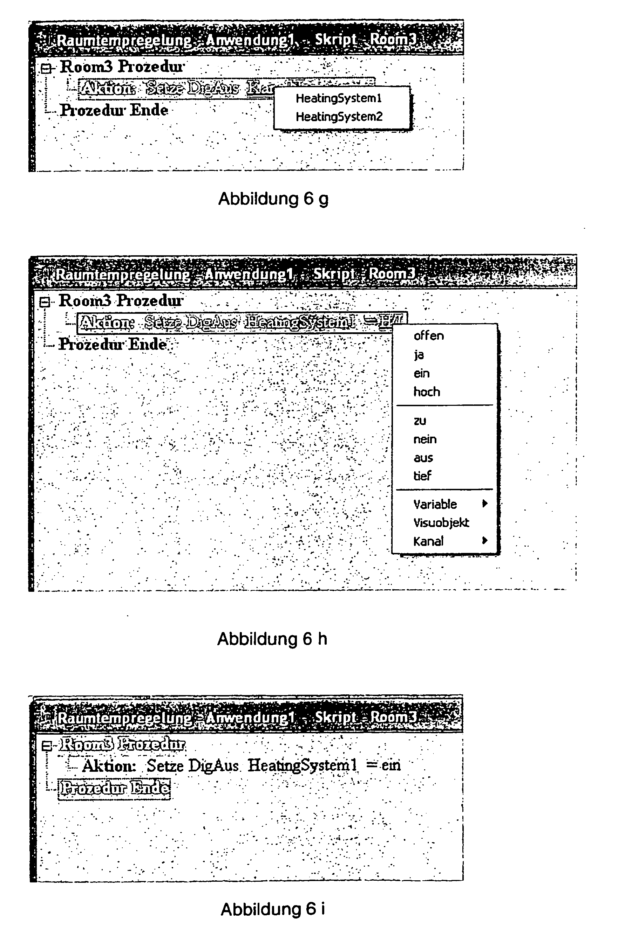

**Abbildung 6a** **zeigt** die fertige Aktionsanweisung, die interaktiv via Mouseclick erstellt wird. Die Anweisung bewirkt, dass der digitale Ausgang, Typ DigAus mit dem Namen HeatingSystem1 auf den Status "ein" gesetzt wird.

**Abbildung 6b** **zeigt**, wie die Anweisung angelegt wird, wenn noch keine freie Zeile verfügbar ist. Der Mousezeiger wird auf die Zeile bewegt, die unter der einzufügenden Zeile steht. Durch Drücken der rechten Maustaste öffnet sich die Auswahlliste "Frage/Aktion /Info entsprechend der Abbidung 6 b. gewählt "Aktion"

**Abbildung 6c**
Mit der linken Maustaste wird "Setze" aus der Auswahlliste Aktion/Setze gewählt.

**Abbildung 6d**
Die Anweisung zeigt noch die unterstrichenen Schlüsselworte Objekt und var . Nach den Regeln müssen alle Schlüsselworte durch Programmcode ersetzt werden.

**Abbildung 6e**
In der Abbildung ist das Schlüsselwort Objekt mit der linken Maustaste angeklickt. Dadurch öffnet sich die Auswahlliste. Gewählt "Kanal und Digital Ausgang"

**Abbildung 6f**
Die Anweisung hat das Aussehen entsprechend der Abbildung mit den noch unterstrichenen Schlüsselworten "Kanalname" und "var".

**Abbildung 6g**
Durch Klick auf das Schlüsselwort "Kanalname" werden die verfügbaren Kanäle angezeigt. Gewählt "Heatingsystem1"

**Abbildung 6h**
Durch Klick auf das Schlüsselwort "var" wird dies durch "H/L"ersetzt. Durch Klick auf "H/L" öffnet sich die Auswahlliste entsprechend der Abbildung gewählt "ein "

**Abbildung 6i**
Zeigt die fertige Anweisung, die durch wenige Mausklicks erzeugt wurde.

## Patentansprüche

1. Verfahren zur Bedienung und Steuerung technischer Prozesse, mit zumindest einer als Mess- und eine Steuergerät ausgebildeten Baugruppe, die mittels elektrischer Leitungen mit Sensoren und Aktoren von Prozessen in Verbindung steht, und mit einem Steuerprogramm, wobei eine Mess- und Steuereinheit (3), eine Bedien- und Beobachtungsbaugruppe (5) und je eine optional vorgesehene Datenbank (6), eine Prozessdokumentation (7) sowie ggfs. weitere Baugruppen einer Prozessautomatisierung durch Datenkanäle (8,9) und ein Steuerprogramm (4) miteinander verbunden sind, **dadurch gekennzeichnet, dass**
- das Steuerprogramm (4) in Steuermodule (10 bis 14) strukturiert ist, wobei die Steuermodule den Kategorien Abläufe (10 bis 12), Ereignisse (13) und Funktionen (14) zugeordnet sind und diese Steuermodule (10 bis 14) virtuelle Container für Programmcode sind,
- das den verschiedenen Steuermodulen (10 bis 14) unterschiedliche Aufgaben zugeordnet sind, die von dem Programmierer in Abhängigkeit des zu steuernden technischen Prozesses (1) ausgewählt werden,
- die Steuermodule (10 bis 14) nach einfachen Regeln aufgerufen werden und andere Steuermodule aufrufen,
- wobei ein Startmodul durch einen Programmaufruf (21, 26) gestartet wird und seinerseits ein Ablaufmodul oder ein Funktionsmodul aufrufen kann,
- wobei ein Ablaufmodul von einem Startmodul, einem anderen Ablaufmodul oder einem Ereignismodul aufgerufen wird und seinerseits ein weiteres Ablaufmodul, ein Funktionsmodul oder ein Endmodul aufruft,
- wobei ein Funktionsmodul von einem Ablaufmodul, einem Startmodul, einem Endmodul oder einem Ereignismodul aufgerufen wird,
- wobei ein Ereignismodul durch ein Ereignis, dass in dem Prozess stattfindet, oder von einer Bedienerhandlung gestartet wird und seinerseits ein Ablaufmodul, ein Funktionsmodul oder ein Endmodul aufruft,
- wobei ein Endmodul durch ein Startmodul, ein anderes Ablaufmodul oder ein Ereignismodul aufgerufen wird.

2. Verfahren zur Bedienung und Steuerung nach Anspruch 1,
**dadurch gekennzeichnet, dass** der Datenaustausch über die Datenkanäle (8,9) zwischen den Baugruppen (3 bis 7) durch Standard-Übertragungsprotokolle erfolgt.

3. Verfahren zur Bedienung und Steuerung nach Anspruch 1 oder 2,
**dadurch gekennzeichnet, dass** die Ablaufmodule (10-12) die Prozessführung übernehmen, wodurch sie für das Steuerprogramm (4) der chronologischen Aneinanderreihung der verschiedenen Aktivitäten verantwortlich sind.

4. Verfahren zur Bedienung und Steuerung nach einem der vorhergehenden Ansprüche,
**dadurch gekennzeichnet, dass** zumindest zwei parallel arbeitende Ablaufmodule (10-12) vorgesehen sind, wobei während eines Durchlaufs nur eines der Ablaufmodule (10-12) aufgerufen werden kann.

5. Verfahren zur Bedienung und Steuerung nach einem der vorhergehenden Ansprüche,
**dadurch gekennzeichnet, dass** die Ereignismodule (13) durch definierte Ereignisse, die im Prozessablauf eintreten können, ausgelöst werden und entweder vorübergehend den Ablauf unterbrechen und selbst die Prozessführung während der Unterbrechung übernehmen oder parallel zu den Abläufen ausgeführt werden.

6. Verfahren zur Bedienung und Steuerung nach einem der vorhergehenden Ansprüche,
**dadurch gekennzeichnet, dass** die Katergorie Funktionen den Typ Funktionsmodul (14) enthält, und dass Funktionsmodule Aufgaben erledigen, die parallel zu Abläufen ausgeführt werden.

7. Verfahren zur Bedienung und Steuerung nach einem der vorhergehenden Ansprüche,
**dadurch gekennzeichnet, dass** die Kategorie Abläufe die Modultypen Ablaufmodule (11), Startmodul (10) und Endmodule 12) enthält.

8. Verfahren zur Bedienung und Steuerung nach einem der vorhergehenden Ansprüche,
**dadurch gekennzeichnet, dass** die Kategorie Ereignisse die Modultypen Ereignismodule (13) und Securitymodule enthält, dass Ereignismodule (13), ausgelöst durch Ereignisse, die zugeordneten Aufgaben erledigen und dass das Securitymodul bei ausserordentlichen Ereignissen den Prozess kontrolliert herunterfährt.

9. Verfahren zur Bedienung und Steuerung nach einem der vorhergehenden Ansprüche,
**dadurch gekennzeichnet, dass** auf die Visuobjekte (15 bis 20) gemäß Abb. 3 mittels Programmanweisungen schreibend und lesend zugegriffen werden kann.

10. Verfahren zur Bedienung und Steuerung nach einem der vorhergehenden Ansprüche,
**dadurch gekennzeichnet, dass** die Verbindungslinien zwischen den Steuermodulen Aufrufe der Steuermodule symbolisieren.

11. Verfahren zur Bedienung und Steuerung nach einem der vorhergehenden Ansprüche,
**dadurch gekennzeichnet, dass** im Laufzeitmodus die Steuermodule markiert sind, deren Programminhalte gerade abgearbeitet werden.

12. Verfahren zur Bedienung und Steuerung nach einem der vorhergehenden Ansprüche,
**dadurch gekennzeichnet, dass** Ablaufmodule (11), Startmodul (10) und Endmodul (12) vertikal verbunden werden,

13. Verfahren zur Bedienung und Steuerung nach einem der vorhergehenden Ansprüche,
**dadurch gekennzeichnet, dass** Ereignismodule (13) und Securitymodule nicht durch andere Steuermodule aufgerufen werden können aber andere Steuermodule aufrufen können.

14. Verfahren zur Bedienung und Steuerung nach einem der vorhergehenden Ansprüche,
**dadurch gekennzeichnet, dass** der Aufruf der Funktionsmodule (14) durch horizontale Linien symbolisiert ist.

15. Verfahren zur Bedienung und Steuerung nach einem der vorhergehenden Ansprüche,
**dadurch gekennzeichnet, dass** die Richtung der Anordnung (horizontal, vertikal) ohne Änderung der Funktion austauschbar ist.

16. Verfahren zur Bedienung und Steuerung nach einem der vorhergehenden Ansprüche,
**dadurch gekennzeichnet, dass** die Steuermodule als virtuelle Programmcontainer dienen und der Zugang zum Programmcode durch virtuelles Öffnen der Programmcontainer via Tastatur oder Mouse ermöglicht wird.

17. Verfahren zur Bedienung und Steuerung nach einem der vorhergehenden Ansprüche,
**dadurch gekennzeichnet, dass** die einzelnen Anweisungen des Steuerprogrammes (4) Schlüsselworte enthalten, die als Platzhalter für weitere Schlüsselworte und Elemente des Programmcodes dienen.

18. Verfahren zur Bedienung und Steuerung nach einem der vorhergehenden Ansprüche,
**dadurch gekennzeichnet, dass** die Schlüsselworte mit zugehörigen Auswahllisten verknüpft sind.

19. Verfahren zur Bedienung und Steuerung nach einem der vorhergehenden Ansprüche,
**dadurch gekennzeichnet, dass** die Inhalte der einzelnen Positionen der jeweiligen Auswahlliste so gestaltet sind, dass sie, wenn sie das Schlüsselwort ersetzen, einen sinnvollen und fehlerfreien Programmcode ergeben.

20. Verfahren zur Bedienung und Steuerung nach einem der vorhergehenden Ansprüche,
**dadurch gekennzeichnet, dass** die ausgewählten Schlüsselworte und Elemente des Programmcodes das ursprüngliche Schlüsselwort ersetzen.

21. Verfahren zur Bedienung und Steuerung nach einem der vorhergehenden Ansprüche,
**dadurch gekennzeichnet, dass** der Vorgang des Ersetzens von Schlüsselworten solange fortgesetzt wird, bis alle Schlüsselworte durch fertigen Programmcode ersetzt worden sind.

22. Verfahren zur Bedienung und Steuerung nach einem der vorhergehenden Ansprüche,
**dadurch gekennzeichnet, dass** die Programmanweisungen so gestaltet sind, dass sie den Kategorien Abfrage oder Aktion zugeordnet sind.

23. Verfahren zur Bedienung und Steuerung nach einem der vorhergehenden Ansprüche,
**dadurch gekennzeichnet, dass** das erste Schlüsselwort einer Programmanweisung Abfrage oder Aktion lautet

24. Verfahren zur Bedienung und Steuerung nach einem der vorhergehenden Ansprüche,
**dadurch gekennzeichnet, dass** die Kategorie Abfrage die Anweisung mit der sinngemässen Formulierung >Wenn (logische Operation) dann< enthält.

## Claims

1. Method for operating and controlling technical processes, with at least one subassembly which is in the form of a measuring and control device and is connected to sensors and actuators for processes by means of electrical lines, and with a control program, a measuring and control unit (3), an operating and monitoring subassembly (5) and a respective optionally provided database (6), process documentation (7) and, if appropriate, further process automation subassemblies being connected to one another by means of data channels (8, 9) and a control program (4), **characterized in that**
- the control program (4) is structured in control modules (10 to 14), the control modules being assigned to the categories of sequences (10 to 12), events (13) and functions (14) and these control modules (10 to 14) being virtual containers for program code,
- the different control modules (10 to 14) are assigned different tasks which are selected by the programmer on the basis of the technical process (1) to be controlled,
- the control modules (10 to 14) are called according to simple rules and call other control modules,
- a start module being started by a program call (21, 26) and, for its part, being able to call a sequence module or a function module,
- a sequence module being called by a start module, another sequence module or an event module and, for its part, calling a further sequence module, a function module or an end module,
- a function module being called by a sequence module, a start module, an end module or an event module,
- an event module being started by an event which occurs in the process or by an operator action and, for its part, calling a sequence module, a function module or an end module,
- an end module being called by a start module, another sequence module or an event module.

2. Operating and control method according to Claim 1,
**characterized in that** data are interchanged via the data channels (8, 9) between the subassemblies (3 to 7) using standard transmission protocols.

3. Operating and control method according to Claim 1 or 2,
**characterized in that** the sequence modules (10-12) undertake process control, as a result of which they are responsible for the control program (4) for chronologically stringing together the different activities.

4. Operating and control method according to one of the preceding claims,
**characterized in that** at least two sequence modules (10-12) which operate in a parallel manner are provided, only one of the sequence modules (10-12) being able to be called during a run.

5. Operating and control method according to one of the preceding claims,
**characterized in that** the event modules (13) are triggered by defined events, which can occur in the process sequence, and either temporarily interrupt the sequence and themselves undertake process control during the interruption or are executed in parallel with the sequences.

6. Operating and control method according to one of the preceding claims,
**characterized in that** the category of functions contains the type of function module (14), and **in that** function modules carry out tasks which are executed in parallel with sequences.

7. Operating and control method according to one of the preceding claims,
**characterized in that** the category of sequences contains the module types of sequence modules (11), start module (10) and end modules (12).

8. Operating and control method according to one of the preceding claims,
**characterized in that** the category of events contains the module types of event modules (13) and security modules, **in that** event modules (13), when triggered by events, carry out the associated tasks, and **in that** the security module shuts down the process in a controlled manner in the case of exceptional events.

9. Operating and control method according to one of the preceding claims,
**characterized in that** it is possible to have read and write access to the display objects (15 to 20) according to Fig. 3 using program instructions.

10. Operating and control method according to one of the preceding claims,
**characterized in that** the connecting lines between the control modules symbolize calls of the control modules.

11. Operating and control method according to one of the preceding claims,
**characterized in that** the control modules whose program contents are being processed are marked in the runtime mode.

12. Operating and control method according to one of the preceding claims,
**characterized in that** sequence modules (11), the start module (10) and the end module (12) are vertically connected.

13. Operating and control method according to one of the preceding claims,
**characterized in that** event modules (13) and security modules cannot be called by other control modules but can call other control modules.

14. Operating and control method according to one of the preceding claims,
**characterized in that** the call of the function modules (14) is symbolized by horizontal lines.

15. Operating and control method according to one of the preceding claims,
**characterized in that** the direction of the arrangement (horizontal, vertical) can be changed without changing the function.

16. Operating and control method according to one of the preceding claims,
**characterized in that** the control modules are used as virtual program containers and the program code can be accessed by virtually opening the program containers via a keyboard or a mouse.

17. Operating and control method according to one of the preceding claims,
**characterized in that** the individual instructions of the control program (4) contain keywords which are used as place holders for further keywords and elements of the program code.

18. Operating and control method according to one of the preceding claims,
**characterized in that** the keywords are combined with associated selection lists.

19. Operating and control method according to one of the preceding claims,
**characterized in that** the contents of the individual items of the respective selection list are such that, if they replace the keyword, they result in meaningful and error-free program code.

20. Operating and control method according to one of the preceding claims,
**characterized in that** the selected keywords and elements of the program code replace the original keyword.

21. Operating and control method according to one of the preceding claims,
**characterized in that** the operation of replacing keywords is continued until all keywords have been replaced with finished program code.

22. Operating and control method according to one of the preceding claims,
**characterized in that** the program instructions are such that they are assigned to the categories of query or action.

23. Operating and control method according to one of the preceding claims,
**characterized in that** the first keyword of a program instruction is query or action.

24. Operating and control method according to one of the preceding claims,
**characterized in that** the query category contains the instruction with the corresponding wording >If (logic operation), then<.

## Revendications

1. Procédé de commande et de contrôle de processus techniques, comprenant au moins un sous-ensemble réalisé sous la forme d'un appareil de mesure et de contrôle qui est relié avec des capteurs et des actionneurs de processus par le biais de lignes électriques, et comprenant un programme de contrôle, une unité de mesure et de contrôle (3), un sous-ensemble de commande et d'observation (5) et à chaque fois une base de données (6) prévue en option, une documentation de processus (7) ainsi qu'éventuellement d'autres sous-ensembles d'une automatisation de processus étant reliés entre eux par des canaux de données (8, 9) et un programme de contrôle, **caractérisé en ce que**
- le programme de contrôle (4) est structuré en modules de contrôle (10 à 14), les catégories opérations (10 à 12), événements (13) et fonctions (14) étant associées aux modules de contrôle et ces modules de contrôle (10 à 14) étant des conteneurs virtuels pour le code du programme,
- des tâches différentes sont associées aux différents modules de contrôle (10 à 14), lesquelles sont sélectionnées par le programmeur en fonction du processus technique (1) à contrôler,
- les modules de contrôle (10 à 14) sont invoqués selon des règles simples et invoquent d'autres modules de contrôle,
- un module de départ étant démarré par une invocation de programme (21, 26) et pouvant, de son côté, invoquer un module d'opération ou un module de fonction,
- un module d'opération étant invoqué par un module de départ, un autre module d'opération ou un module d'événement et invoquant de son côté un autre module d'opération, un module de fonction ou un module final,
- un module de fonction étant invoqué par un module d'opération, un module de départ, un module final ou un module d'événement,
- un module d'événement étant démarré par un événement qui a lieu dans le processus ou par une manipulation de l'opérateur et invoquant de son côté un module d'opération, un module de fonction ou un module final,
- un module final étant invoqué par un module de départ, un autre module d'opération ou un module d'événement.

2. Procédé de commande et de contrôle selon la revendication 1, **caractérisé en ce que** l'échange de données s'effectue par des protocoles de transmission de données normalisés sur les canaux de données (8, 9) entre les sous-ensembles (3 à 7).

3. Procédé de commande et de contrôle selon la revendication 1 ou 2, **caractérisé en ce que** les modules d'opération (10-12) prennent en charge la conduite du processus, en conséquence de quoi ils sont responsables du programme de contrôle (4) de la succession chronologique des différentes activités.

4. Procédé de commande et de contrôle selon l'une des revendications précédentes, **caractérisé en ce que** sont prévus au moins deux modules d'opération (10-12) fonctionnant en parallèle, un seul des modules d'opération (10-12) pouvant être invoqué pendant un cycle.

5. Procédé de commande et de contrôle selon l'une des revendications précédentes, **caractérisé en ce que** les modules d'événement (13) sont déclenchés par des événements définis qui peuvent se produire dans le déroulement du processus et, soit ils interrompent prématurément le déroulement et prennent temporairement en charge eux-mêmes la conduite du processus pendant l'interruption, soit ils sont exécutés parallèlement aux opérations.

6. Procédé de commande et de contrôle selon l'une des revendications précédentes, **caractérisé en ce que** la catégorie fonctions contient le type module de fonction (14) et que les modules de fonction accomplissent des tâches qui sont exécutées parallèlement aux opérations.

7. Procédé de commande et de contrôle selon l'une des revendications précédentes, **caractérisé en ce que** la catégorie opérations contient les types de module modules d'opération (11), module de départ (10) et modules finaux (12).

8. Procédé de commande et de contrôle selon l'une des revendications précédentes, **caractérisé en ce que** la catégorie événements contient les types de module modules d'événement (13) et des modules de sécurité, que les modules d'événement (13), déclenchés par des événements, accomplissent les tâches associées et que le module de sécurité, en présence d'événements exceptionnels, réalise une mise à l'arrêt contrôlée du processus.

9. Procédé de commande et de contrôle selon l'une des revendications précédentes, **caractérisé en ce qu'**il est possible d'accéder en écriture et en lecture aux objets dé visualisation (15 à 20) selon la figure 3 au moyen d'instructions de programme.

10. Procédé de commande et de contrôle selon l'une des revendications précédentes, **caractérisé en ce que** les lignes de liaison entre les modules de contrôle symbolisent les invocations des modules de contrôle.

11. Procédé de commande et de contrôle selon l'une des revendications précédentes, **caractérisé en ce qu'**en mode exécution, les modules de contrôle dont le contenu de programme est en cours de traitement sont marqués.

12. Procédé de commande et de contrôle selon l'une des revendications précédentes, **caractérisé en ce que** les modules d'opération (11), le module de départ (10) et le module final (12) sont reliés verticalement.

13. Procédé de commande et de contrôle selon l'une des revendications précédentes, **caractérisé en ce que** les modules d'événement (13) et les modules de sécurité ne peuvent pas être invoqués par d'autres modules de contrôle, mais ils peuvent invoquer d'autres modules de contrôle.

14. Procédé de commande et de contrôle selon l'une des revendications précédentes, **caractérisé en ce que** l'invocation des modules de fonction (14) est symbolisé par des lignes horizontales.

15. Procédé de commande et de contrôle selon l'une des revendications précédéntes, **caractérisé en ce que** le sens de la disposition (horizontal ou vertical) peut être changé sans modifier la fonction.

16. Procédé de commande et de contrôle selon l'une des revendications précédentes, **caractérisé en ce que** les modules de contrôle font office de conteneurs de programme virtuels et l'accès au code de programme est rendu possible par une ouverture virtuelle du conteneur de programme par le biais du clavier ou de la souris.

17. Procédé de commande et de contrôle selon l'une des revendications précédentes, **caractérisé en ce que** les instructions individuelles du programme de contrôle (4) contiennent des mots-clés qui servent d'espaces réservés pour d'autres mots-clés et éléments du code de programme.

18. Procédé de commande et de contrôle selon l'une des revendications précédentes, **caractérisé en ce que** les mots-clés sont liés à des listes de sélection associées.

19. Procédé de commande et de contrôle selon l'une des revendications précédentes, **caractérisé en ce que** les contenus des postes individuels de la liste de sélection correspondante sont configurés de telle sorte que lorsqu'ils remplacent le mot-clé, ils produisent un code de programme cohérent et sans erreur.

20. Procédé de commande et de contrôle selon l'une des revendications précédentes, **caractérisé en ce que** les mots-clés et les éléments sélectionnés du code de programme remplacent le mot-clé originel.

21. Procédé de commande et de contrôle selon l'une des revendications précédentes, **caractérisé en ce que** l'opération de remplacement des mots-clés se poursuit jusqu'à ce que tous les mots-clés aient été remplacés par un code de programme fini.

22. Procédé de commande et de contrôle selon l'une des revendications précédentes, **caractérisé en ce que** les instructions de programme sont configurées de telle sorte qu'elles sont associées aux catégories interrogation ou action.

23. Procédé de commande et de contrôle selon l'une des revendications précédentes, **caractérisé en ce que** le premier mot-clé évoque une instruction de programme interrogation ou action.

24. Procédé de commande et de contrôle selon l'une des revendications précédentes, **caractérisé en ce que** la catégorie interrogation contient l'instruction avec la formulation en substance >Si (opération logique) alors<.
